# EUROPEAN PATENT SPECIFICATION

(11) **EP 2 973 379 B1**
(45) Date of publication and mention of the grant of the patent: **11.08.2021**
(21) Application number: 14704227.9
(22) Date of filing: 23.01.2014
(51) Int. Cl.: G06Q 50/32, H04L 12/58

(54) **PERSONALIZED SUMMARIES FOR CONTENT**
PERSONALISIERTE ZUSAMMENFASSUNGEN FÜR INHALTE
RÉSUMÉS PERSONNALISÉS DE CONTENUS

(30) Priority: 13.03.2013 US 201313801148
(43) Date of publication of application: 20.01.2016
(73) Proprietor: Google LLC, Mountain View, CA 94043 (US)
(72) Inventor: ALAKUIJALA, Jyrki, Antero, Mountain View, CA 94043 (US); LYASHUK, Alexander, Mountain View, CA 94043 (US)
(74) Representative: Shipp, Nicholas
(86) International application number: PCT/US2014/012646
(87) International publication number: WO 2014/163732

(56) References cited:
- EP-A1- 2 249 261
- KR-A- 20130 007 244
- US-A1- 2004 143 636
- US-A1- 2008 281 927
- US-A1- 2010 223 341
- US-A1- 2011 289 161
- US-A1- 2011 300 884
- US-B1- 8 060 463
- US-B1- 8 185 448
- US-B2- 7 178 099
- None

## Description

### CROSS REFERENCE TO RELATED APPLICATION

This application claims priority to U.S. Nonprovisional Patent Application No. 13/801,148, filed on March 13, 2013, entitled "PERSONALIZED SUMMARIES FOR CONTENT".

### BACKGROUND

This description relates generally to communications delivered by computer messages. Messages such as emails, social media posts, online chat discussions, or other electronic communication may include a reference to external or attached content. External content may include, for example, a PDF, a link to a webpage, a document, a video, any multimedia content, or an attachment. US patent number US 8,185,448 B1 presents a fact checking system which verifies the correctness of information and/or characterizes the information by comparing the information with one or more sources. US patent application publication number US 2010/223341 A1 presents providing for electronic messaging tailored to contexts or interests of one or more participants of electronic communication. European patent application publication number EP 2 249 261 A1 presents recommendations for content generated based on social networking communities. US patent number US 8,060,463 B1 presents a matching service which matches users to other users, and/or to user communities, based at least in part on computer analysis of event data reflective of user behaviors. US patent application publication number US 2011/300884 A1 presents an apparatus including a messaging module configured to suggest a message segment in order to draft a message.

### SUMMARY

The invention is defined by the claims. Any part of the description not within the scope of the claims is an example for understanding the invention and not an embodiment of the invention.

One or more of the implementations of the subject matter described here may provide one or more of the following advantages. The summarized content reflects the interests of the recipient. The summarized content may also reflect common interests of the sender and the recipient.

The details of one or more implementations are set forth in the accompanying drawings and the description below. Other features will be apparent from the description and drawings, and from the claims.

### BRIEF DESCRIPTION OF THE DRAWINGS

FIG. 1 illustrates an example system.
FIG. 2 is an example user interface.
FIG. 3 is another example user interface.
FIG. 4 is a flow chart illustrating an example method of generating personalized summaries for content.
FIG. 5 is an example of a generic computer device that may be used with techniques described here.
FIG. 6 is an example of a generic computer device that may be used with techniques described here.

Like reference symbols in the various drawings indicate like elements.

### DETAILED DESCRIPTION

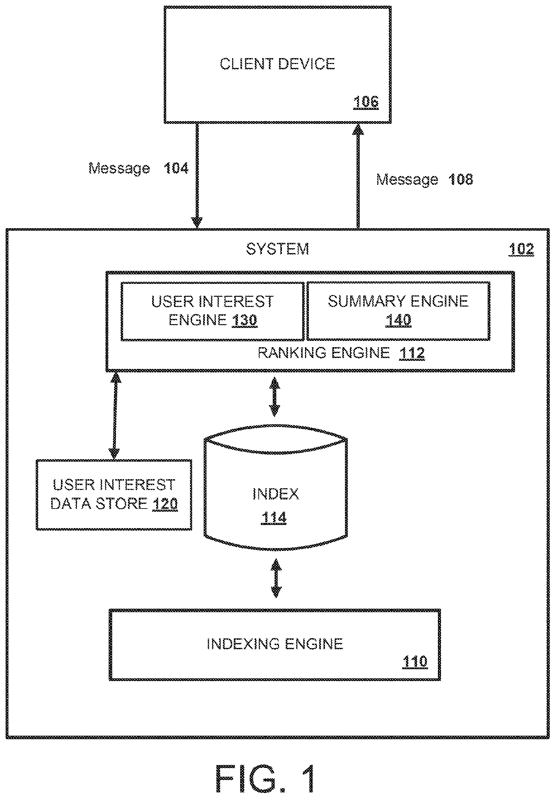

FIG. 1 illustrates an example system 102. The system 102 can be implemented on one or more computers that communicate, for example, through a network. The system receives messages 104 with a reference to external content from a client device 106 and generates revised messages 108 with summarized content that includes extracts from the external content. Each message 104 is an electronic communication such as an e-mail, post, text message, etc. The message 104 can be, for example, in text form or in other forms, for example, in audio form or in image form.

The summarized content may be produced by an automatic process that reduces a document (e.g., the external content) using a computer program to create a summary that retains the most important points of the original document. Technologies that can make a coherent summary may take into account variables such as length, writing style, and syntax. Personalization technology described here may enable dynamic insertion, customization, or suggestion of summarized content in any format that is relevant to an individual user, for example based on one or more of the user's behavior, implied preferences, and based on explicitly given information. The personalization may include relevant concepts which may be referred to here as "entities" (an "entity" may be a person, place, thing, or concept). Such entities may be extracted from documents using concept mining, which may involve aspects of artificial intelligence, statistics, data mining, and text mining.

The system 102 and the client device 106 can communicate through a network, for example, an intranet or the Internet. While the system 102 and the client device 106 are shown as two separate devices, in some implementations, the system 102 and the client device 106 can be the same device.

The system 102 includes an indexing engine 110 and a ranking engine 112. The indexing engine 110 maintains an index 114 for use by the system 102. The indexing engine 110 processes documents and updates index entries in the index 114, for example, using conventional or other indexing techniques.

In some implementations, the system 102 may maintain a user interest data store 120. In the instance where a user consents to the use of such data, the user interest data store 120 may include one or more entities, websites, text, search queries, demographic data, or other user interest information that may be used by system 102. In some implementations, the user interest data store 120 may classify search queries by user, by frequency, by location, and by date or time, where the user consents to the use of such data. In some implementations, the user interest data store 120 may be included as part of index 114.

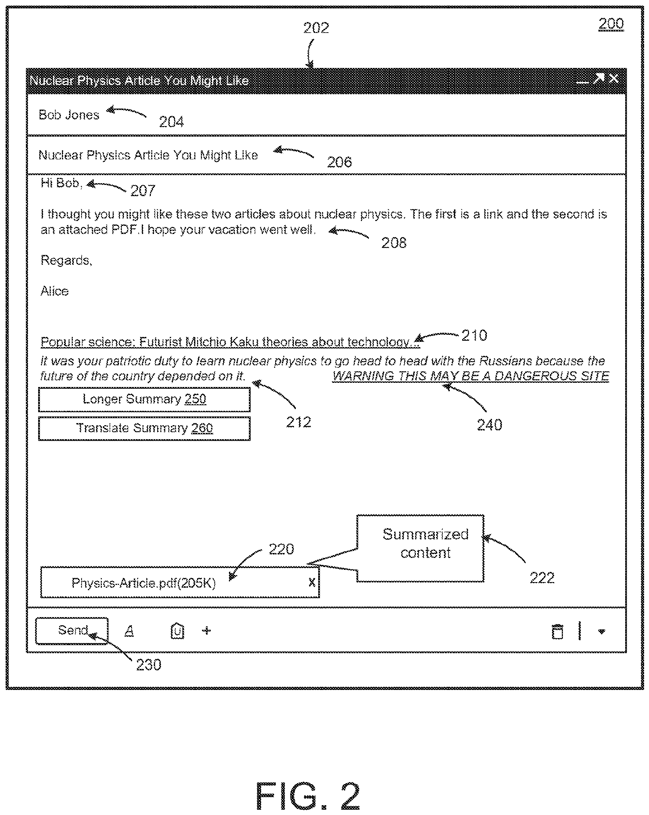

A user interest engine 130 may analyze message 104 to determine if one or more terms from the message are associated with a recipient's interest, using user interest data store 120, for example, and in the cases where the users consent to the use of such data. The user interest engine 130 may use the user interest data store 120 to identify interests in the message using techniques described herein, for example as discussed in more detail below with respect to FIGs. 2-4. In some implementations, user interest engine 130 may analyze a message to locate one or more terms from the message 104 in common with an interest of a recipient of the message 104. A summary engine 140 may use the results of that analysis to generate a summarized content for a referenced external content (e.g., an attachment or a link) referenced by or associated with the message.

The ranking engine 112 (e.g., the summary engine 140) may use the index 114 to identify information, such as portions of documents or quick-links to parts of the document related to the message 104, for example, using conventional or other information retrieval techniques. The ranking engine 112 calculates scores for the entities in the documents, for example, using one or more ranking signals. Each signal provides information about the document itself or the relationship between the document and the message. One example signal is a measure of the overall quality of the document. Another example signal is a measure of the number of times the terms of the message occur in the document or in a portion of the document. Other signals can also be used. The ranking engine 112 ranks the responsive documents or portions of documents using the scores.

Although user interest engine 130 and summary engine 140 are depicted as part of ranking engine 112, in various implementations, user interest engine 130 or summary engine 140 may be included as part of indexing engine 110, or as a separate, single engine within system 102.

As an example, a sender of a message 104 might include the subject of the message 104 as "beach vacations" and attached external content (e.g., a document about Florida) to the message 104, without any detailed explanation of the document. The recipient may not want to review or scroll through the entire document to find relevant information, especially if the document is long. The summary engine 140 may therefore provide a summarized content for the document that refers to a "Florida beach vacation package for $1000" to be included as part of the message 104 (e.g., as message 108). The summarized content may be an extract of text from the document. Other examples of summaries generated by the system 102 are described in more detail below with respect to FIGs. 2-6.

FIG. 2 is an example user interface. As shown in FIG. 2, a system such as system 102 may present a user interface 200 including a message 202. In this example, the message 202 is an e-mail message. In various implementations, however, the message could be a social media post, a text message, or other electronic communication. The message 202 includes a recipient name 204, a title 206, a greeting 207, text 208, a link 210, and an attachment 220. In the example shown in FIG. 2, a sender is drafting an e-mail to a recipient 204 "Bob Jones" with the title 206 "Nuclear Physics Article You Might Like". The greeting 207 "Hi Bob," and text 208 of the message may be entered and edited by the sender in any e-mail application, web-based email program, etc. The sender includes a link 210 to external content (a website entitled "Popular science Futurist Mitchio Kaku theories about technology....") and an attachment 220 "Physics-Article.pdf'.

In the instance where a user consents to the use of such data, the system 102 generates personalized summaries of each of the external contents-i.e., of the website from the link 210 and of the content of attachment 220. The personalized summaries include summarized content 212 and summarized content 222. The system may gather entities from the context of the message 202, and use the entities to emphasis content in the summarized content 212 or the summarized content 222. For example, in the message 202 the title 206 includes "Nuclear Physics". The system may use the entity "nuclear physics", which was gathered from the context, to emphasize content related to nuclear physics in the summarized content 212.

In some implementations, in the instance where a user consents to the use of such data, the system 102 generates the personalized summaries automatically as the sender types the message 202. In various implementations, the system creates the summarized content 212 and summarized content 222 after a sender requests such summary generation. Alternatively or additionally, in cases where users consent, the system generates the summaries after the sender hits the "send" button 230. In such an implementation, the sender may not view the summarized content 212 and summarized content 222 before sending the message 202, but the recipient would see the summaries in the e-mail message 202 upon receiving the message 202. In various implementations, the sender may view the message 202 with the summarized content 212 and summarized content 222 in a sent message folder of an e-mail application after the e-mail is sent.

As shown in message 202, summarized content can take various forms. For example summarized content 222 is shown in a pop-up style window which may appear if a user hovers a cursor over attachment 220, or may appear as text within message 202. Summarized content 212 appears as text below link 210.

In some implementations, the sender may review and customize the summarized content (e.g., change or add to) or remove the summarized content 212 and summarized content 222 before sending the message 202 (e.g., before hitting the send button 230.) For example, a sender may wish to customize the text even more specifically for the recipient by adding to the text or by removing some of the summarized content. In some implementations, a user may select a graphical user interface element 250 to opt for a longer summarized content 212 than a default length, which may be set for example as one sentence. In some implementations, a user may opt to have the system automatically convert the summarized content 212 to another language, for example by selecting a graphical user interface element 260.

In some implementations, the system may determine a scoring for some or all of the external content, and use the scoring in generating the summarized content 222. The scoring may be based on, for example, a political score, a technicality, or a spam score. For example, the system may determine that link 210 is related to a webpage whose domain is associated with some spam, and will assign a spam score to the link 210. As a result, the system may include a spam score 240 or other warning in association with the summarized content 212 or elsewhere in the message 202. As another example, the system may determine that a link is related with an acclaimed scientific publication, and may reflect that in association with the summarized content 212.

In some implementations, the system may adapt the summarized content to a vocabulary or style of the sender, with the consent of the users. In some implementations, the system may generate the language of the summarized content based on an age or skill level of the sender or recipient, with the consent of the users. For example, the summarized content 212 may be personalized differently based on native language or reading level.

In some implementations, a topicality score may change the summarized content. For example, the system may use entities that have a high topicality in news sources to increase those entities in value in summary generation. As an example, the system may determine that an entity in the external content (e.g., in link 210 or attachment 220) is related to a topical news story. For example, the system may determine that "nuclear physics" was an entity that appeared in many news stories (e.g., that day, or within the past week of message 202 being created), and may increase the entity "nuclear physics" when it generates summarized content. The system may boost terms (e.g., score terms higher when selecting what terms to include in a summary) if those terms are associated with the entity "nuclear physics" when the system generates summarized content 212 and summarized content 222. Alternatively or additionally, the system may emphasize terms (e.g., provide in bold, colored, underlined, or italicized formats) if those terms are associated with the entity "nuclear physics" when the system provides the summarized content 212 and the summarized content 222. In some implementations, the system may attempt to present summarized content in the same order as the content is presented in the external content.

In some implementations, in instances where the users have consented to the use of such data, the system may access user interest models of interests of the sender and recipient from various sources, such as e-mail, social network groups, search history, education, age, gender, or other sources. The system may model interests of users using, for example, an entity-vector. Such models may be generated offline, for example, once a day, or once a week, etc. The system may determine common interests of multiple users, for example based on user interest models of both a sender and a recipient of message 202. Information in an individual user model is protected such that other users cannot determine its contents.

In some implementations, the system may use a function of the entity-vectors from two user interest models to determine common interests of two people, e.g., a function that depends on multiplying the two entity-vectors. Such multiplication may be done for example when message 202 is created or drafted, or when the message 202 is sent to a recipient. In some implementations, for example with group messages, the system may normalize an entity-vector for a group of users. It will be understood that there may, in some cases, be multiple senders and recipients of messages, for example in a chat discussion or social media forum. The system may gather entities from the entity-vectors and the system may use those entities to emphasis content in the summarized content of a message (such as the summarized content 212 shown in FIG. 2). In such a way, the system may generate summarized content that is of personal interest to the recipient.

It will be understood that the message 202 is an example only, and in various implementations, the message 202 may include other elements, such as a sender, other recipients, an image, other attachments or links, a date, a time, other metadata, etc.

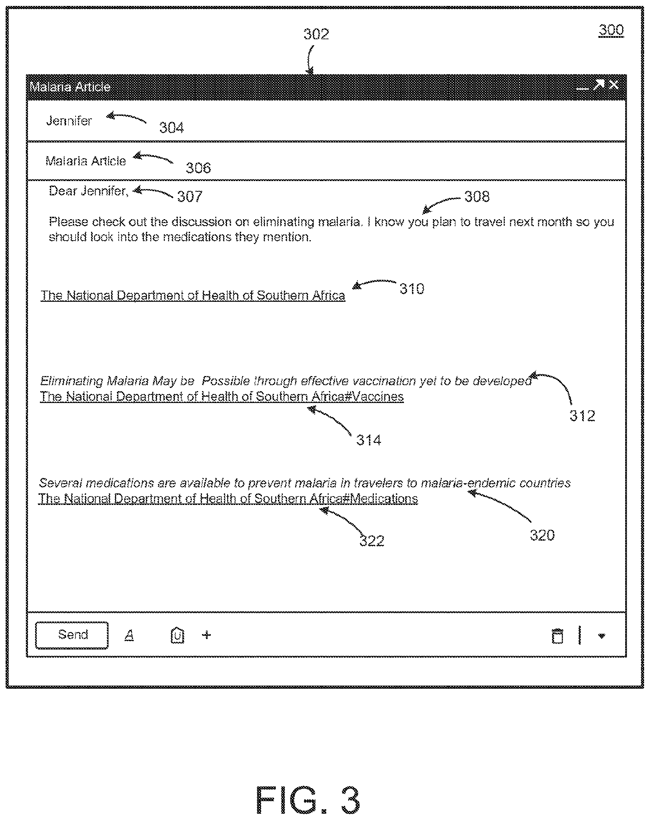

FIG. 3 is an example user interface. As shown in FIG. 3, a system such as system 102 may present a user interface 300 including a message 302. In this example, the message 302 is an e-mail message.

The message 302 includes a recipient name 304, a title 306, a greeting 307, text 308, and a link 310. In the example shown in FIG. 3, a sender is drafting an e-mail to a recipient 304 "Jennifer" with the title 306 "Malaria Article". The greeting 307 "Dear Jennifer," and text 308 of the message may be entered and edited by the sender in any e-mail application, web-based email program, etc. The sender includes a link 310 to external content, which in this example is a website with the title "The National Department of Health of Southern Africa". The recipient may be unaware of what the link 310 references or what the sender wants the recipient to look at in the link, and the recipient may have to access the external content and then scroll through irrelevant content before finding relevant information.

In the instance where the users consent to the use of such data, the system may include one or more personalized summaries of the content, with quick-links (e.g., a modified version of a hyperlink) that bring the reader directly to a relevant place in the content. The system may gather entities from the context of the message 302 (e.g., title 306, greeting 307, text 308, or other information associated with the message 302) and emphasize the gathered entities in the generation of summarized content. In various implementations, for example as shown in FIG. 3, the system may generate multiple summaries and multiple quick links. For example, as shown in FIG. 3, the system may gather the entity "malaria" and use the entity to generate summarized content 312 "Eliminating Malaria May be Possible through effective vaccination yet to be developed " with quick link 314 "The National Department of Health of Southern Africa#Vaccines". As another example, the system may gather the entity "medications" and use the entity to generate a summarized content 320 "Several medications are available to prevent malaria in travelers to malaria-endemic countries" and an associated quick link 322 "The National Department of Health of Southern Africa#Medications." In some implementations, the sender may edit the summaries and the quick link 314 or quick link 322, or add other summaries or quick links to the message 302.

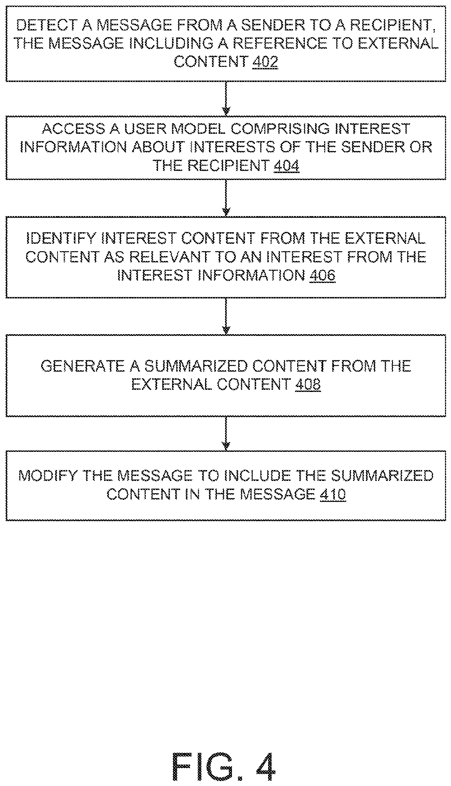

FIG. 4 a flow chart illustrating an example method of generating personalized summaries for content. For convenience, the steps of the flow chart are described with reference to a system that performs the steps. The system can be, for example, system 102 described above with reference to FIG.1, component 112 described above with reference to FIG. 1, or other systems.

In the example of FIG. 4, the system detects a message from a sender to a recipient, the message including a reference to externals content (402). For example, the message may be one of message 202 shown in FIG. 2 or message 302 shown in FIG. 3. The reference to external content may be a link 210 (which refers to an web page) or an attachment 220 as shown in FIG. 2, for example. The system accesses a user interest model comprising information about interests of the sender or the recipient (404). In instances where a user consents to the use of such data, the interests may be stored in the user interest data store 120 as shown in FIG. 1, in the index 114, or in one or more other data stores accessible by the system. Interests may include, for example, entities, such as geographic locations associated with the user, terms from prior search queries of the user, demographic data, social media data (such as recent purchases or self-supplied interests of close friends), and other information, in cases where a user consents to the use of such data.

The system (e.g., user interest engine 130 shown in FIG. 1) identifies interest content from the external content as relevant to an interest from the interest information (406). The interest content may include entities from an entity-vector associated with the user, for example, as described above with respect to FIG. 2. The system generates a summarized content from the external content (408). The summarized content may be based on the interest content and containing only a subset of information in the external content. The system modifies the message to include the summarized content in the message (410) for example as shown in FIG. 2 and FIG. 3.

In some implementations, entities or interests that are identified in the external content are analyzed (e.g., using user interest engine 130) to determine whether the entities or interests relate to user-identified interests. The system may identify entities using, for example, a data graph such as a knowledge graph or other technology. In some implementations, the system may utilize a map or a graph to identify entities on a webpage that may interest a particular user. For example, any entity name in a header can be identified using a knowledge graph or similar data. A header of a webpage may partially or fully match an entity name and may match multiple entities. In various implementations, headers can be ranked by how well they match the entities, and how many of the entities are matched that are related to a user's interests.

In some implementations, the system scores potential summarized content (e.g., in steps 408 by weighting the amount of overlap via either the message's context (e.g., text, subject, greeting) or the sender or recipient's interests. In some implementations, the system scores potential summarized content based on topicality or other factors.

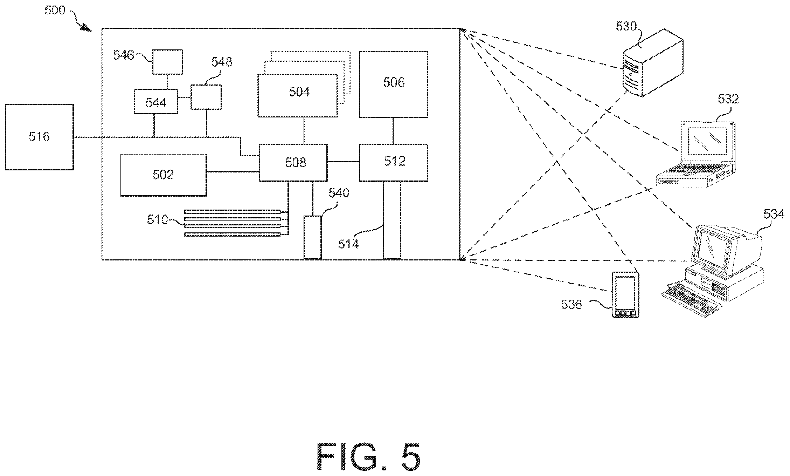

FIG. 5 shows an example of a generic computer device 500, which may be system 102 of FIG. 1, and which may be used with the techniques described here. Computing device 500 is intended to represent various example forms of computing devices, such as laptops, desktops, workstations, personal digital assistants, cellular telephones, smart phones, tablets, servers, and other computing devices, including wearable devices. The components shown here, their connections and relationships, and their functions, are meant to be examples only, and are not meant to limit implementations described or claimed in this document.

Computing device 500 includes a processor 502, a memory 504, a storage device 506, and expansion ports 510 connected via an interface 508. In some implementations, computing device 500 may include transceiver 546, communication interface 544, and a GPS (Global Positioning System) receiver module 548, among other components, connected via interface 508. Device 500 may communicate wirelessly through communication interface 544, which may include digital signal processing circuitry where necessary. Each of the components 502, 504, 506, 508, 510, 540, 544, 546, and 548 may be mounted on a common motherboard or in other manners as appropriate.

The processor 502 can process instructions for execution within the computing device 500, including instructions stored in the memory 504 or on the storage device 506 to display graphical information for a GUI on an external input/output device, such as display 516. Display 516 may be a monitor or a flat touchscreen display. In some implementations, multiple processors or multiple buses may be used, as appropriate, along with multiple memories and types of memory. Also, multiple computing devices 500 may be connected, with each device providing portions of the necessary operations (e.g., as a server bank, a group of blade servers, or a multi-processor system).

The memory 504 stores information within the computing device 500. In one implementation, the memory 504 is a volatile memory unit or units. In another implementation, the memory 504 is a non-volatile memory unit or units. The memory 504 may also be another form of computer-readable medium, such as a magnetic or optical disk. In some implementations, the memory 504 may include expansion memory provided through an expansion interface.

The storage device 506 is capable of providing mass storage for the computing device 500. In one implementation, the storage device 506 may be or contain a computer-readable medium, such as a hard disk device, an optical disk device, or a tape device, a flash memory or other similar solid state memory device, or an array of devices, including devices in a storage area network or other configurations. A computer program product can be tangibly embodied in such a computer-readable medium. The computer program product may also contain instructions that, when executed, perform one or more methods, such as those described above. The computer- or machine-readable medium is a storage device such as the memory 504, the storage device 506, or memory on processor 502.

The interface 508 may be a high speed controller that manages bandwidth-intensive operations for the computing device 500 or a low speed controller that manages lower bandwidth-intensive operations, or a combination of such controllers. An external interface 540 may be provided so as to enable near area communication of device 500 with other devices. In some implementations, controller 508 may be coupled to storage device 506 and expansion port 514. The expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 500 may be implemented in a number of different forms, as shown in the figure. For example, it may be implemented as a standard server 530, or multiple times in a group of such servers. It may also be implemented as part of a rack server system. In addition, it may be implemented in a personal computer such as a laptop computer 522, or smart phone 536. An entire system may be made up of multiple computing devices 500 communicating with each other. Other configurations are possible.

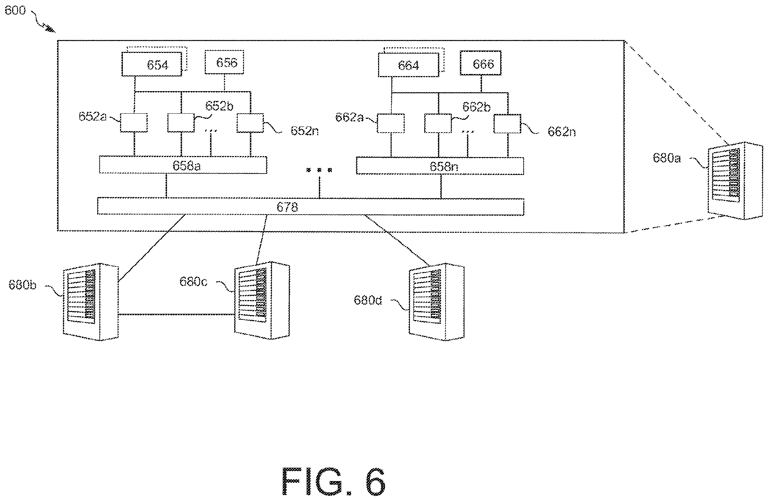

FIG. 6 shows an example of a generic computer device 600, which may be system 102 of FIG. 1, and which may be used with the techniques described here. Computing device 600 is intended to represent various example forms of large-scale data processing devices, such as servers, blade servers, datacenters, mainframes, and other large-scale computing devices. Computing device 600 may be a distributed system having multiple processors, possibly including network attached storage nodes that are interconnected by one or more communication networks. The components shown here, their connections and relationships, and their functions, are meant to be exemplary only, and are not meant to limit implementations described or claimed in this document.

Distributed computing system 600 may include any number of computing devices 680. Computing devices 680 may include a server or rack servers, mainframes, etc. communicating over a local or wide-area network, dedicated optical links, modems, bridges, routers, switches, wired or wireless networks, etc.

In some implementations, each computing device may include multiple racks. For example, computing device 680a includes multiple racks 658a - 658n. Each rack may include one or more processors, such as processors 652a-552n and 662a-562n. The processors may include data processors, network attached storage devices, and other computer controlled devices. In some implementations, one processor may operate as a master processor and control the scheduling and data distribution tasks. Processors may be interconnected through one or more rack switches 658, and one or more racks may be connected through switch 678. Switch 678 may handle communications between multiple connected computing devices 600.

Each rack may include memory, such as memory 654 and memory 664, and storage, such as 656 and 666. Storage 656 and 666 may provide mass storage and may include volatile or non-volatile storage, such as network-attacked disks, floppy disks, hard disks, optical disks, tapes, flash memory or other similar solid state memory devices, or an array of devices, including devices in a storage area network or other configurations. Storage 656 or 666 may be shared between multiple processors, multiple racks, or multiple computing devices and may include a computer-readable medium storing instructions executable by one or more of the processors. Memory 654 and 664 may include, e.g., volatile memory unit or units, a non-volatile memory unit or units, or other forms of computer-readable media, such as a magnetic or optical disks, flash memory, cache, Random Access Memory (RAM), Read Only Memory (ROM), and combinations thereof. Memory, such as memory 654 may also be shared between processors 652a-552n. Data structures, such as an index, may be stored, for example, across storage 656 and memory 654. Computing device 600 may include other components not shown, such as controllers, buses, input/output devices, communications modules, etc.

An entire system, such as system 102, may be made up of multiple computing devices 600 communicating with each other. For example, device 680a may communicate with devices 680b, 680c, and 680d, and these may collectively be known as system 102. As another example, system 102 of FIG. 1 may include one or more computing devices 600 as indexing engine 110, a separate computing device 600 as system 102, and one or more computing devices 600 as index 114. Furthermore, some of the computing devices may be located geographically close to each other, and others may be located geographically distant. The layout of system 600 is an example only and the system may take on other layouts or configurations.

Various implementations can include implementation in one or more computer programs that are executable or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural or object-oriented programming language, or in assembly/machine language. As used herein, the terms "machine-readable medium" "computer-readable medium" refers to any non-transitory computer program product, apparatus or device (e.g., magnetic discs, optical disks, memory (including Read Access Memory), Programmable Logic Devices (PLDs)) used to provide machine instructions or data to a programmable processor.

The systems and techniques described here can be implemented in a computing system that includes a back end component, for example, as a data server, or that includes a middleware component such as an application server), or that includes a front end component such as a client computer having a graphical user interface or a Web browser through which a user can interact with an implementation of the systems and techniques described here, or any combination of such back end, middleware, or front end components. The components of the system can be interconnected by any form or medium of digital data communication such as a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

A number of implementations have been described. In addition, the logic flows depicted in the figures do not require the particular order shown, or sequential order, to achieve desirable results. In addition, other steps may be provided, or steps may be eliminated, from the described flows, and other components may be added to, or removed from, the described systems.

## Claims

1. A computer-implemented method comprising:
detecting (402), by a microprocessor of a computing device, a message (302) from a sender to a recipient, the message (302) including a reference to external content in the form of a link (210, 310) or an attachment (220);
accessing (404) a first user model comprising interest information about interests of the sender;
accessing (404) a second user model comprising interest information about interests of the recipient;
identifying (406), based on the first and second user models, interest content from the external content as relevant to an interest that is common between the sender and the recipient;
generating (408) a summarized content (312, 320) from the external content and based on the interest content and containing only a subset of information in the external content;
generating (408), based on the summarized content (312, 320), a quick link (314, 322) that brings a reader directly to a portion of the external content; and
modifying (410) the message (302) to include the summarized content (312, 320) and the quick link (314, 322) in the message (302).

2. The method of claim 1, wherein a relationship between the sender and the recipient is modeled as an entity-vector, and wherein the summarized content (312, 320) is generated using the entity-vector.

3. The method of any of the preceding claims, further comprising:
enabling the sender to edit the summarized content (312, 320) prior to delivering the message (302) to the recipient.

4. The method any of the preceding claims, further comprising:
determining a context of the message (302); and
using the context to emphasize an entity in the summarized content (312, 320).

5. The method of claim 4, wherein the context includes a greeting (307), a subject (306), or a text (308) in the message.

6. The method of any of the preceding claims further comprising:
determining that an entity in the summarized content (312, 320) relates to a topical news story from within a predetermined date range of a date of the message; and
using the determination to boost the entity in the summarized content (312, 320).

7. A system comprising:
at least one processor (502); and
a memory (504) that stores instructions that, when executed by the at least one processor, cause the system to perform operations of:
detecting (402) a message (302) from a sender to a recipient, the message (302) including a reference to external content in the form of a link (210, 310) or an attachment (220);
accessing (404) a first user model comprising interest information about interests of the sender;
accessing (404) a second user model comprising interest information about interests of the recipient;
identifying (406), based on the first and second user models, interest content from the external content as relevant to an interest that is common between the sender and the recipient;
generating (408) a summarized content (312, 320) from the external content and based on the interest content and containing only a subset of information in the external content;
generating (408), based on the summarized content (312, 320), a quick link (312, 322) that brings a reader directly to a portion of the external content; and
modifying (410) the message (302) to include the summarized content (312, 320) and the quick link (314, 322) in the message (302).

8. The system of claim 7, the instructions causing the system to further perform the operations of:
determining a scoring of the summarized content (312, 320); and
presenting the scoring with the summarized content (312, 320).

9. The system of claim 7 or 8, the instructions causing the system to further perform the operations of:
determining a context of the message (302); and
using the context to emphasize an entity in the summarized content (312, 320).

10. The system of any of claims 7 to 9, the instructions causing the system to further perform the operations of:
enabling the sender to edit the summarized content (312, 320) prior to delivering the message (302) to the recipient.

11. The system of any of claims 7 to 10, the instructions causing the system to further perform the operations of:
providing an option (260) for the sender to translate the summarized content (312, 320) into another language.

12. A non-transitory computer readable medium including instructions that when executed cause a system to perform all the steps of the method of any of claims 1 to 6.

## Patentansprüche

1. Computerimplementiertes Verfahren, umfassend:
Erfassen (402), durch einen Mikroprozessor eines Computergeräts, einer Nachricht (302) von einem Absender an einen Empfänger, wobei die Nachricht (302) einen Verweis auf externen Inhalt in Form eines Links (210, 310) oder eines Anhangs (220) umfasst;
Zugreifen (404) auf ein erstes Benutzermodell, das Interesseninformationen über Interessen des Absenders umfasst;
Zugreifen (404) auf ein zweites Benutzermodell, das Interesseninformationen über Interessen des Empfängers umfasst;
Identifizieren (406) von Interesseninhalten aus dem externen Inhalt auf der Grundlage des ersten und zweiten Benutzermodells als relevant für ein Interesse, das der Absender und der Empfänger miteinander gemein haben;
Erzeugen (408) eines zusammengefassten Inhalts (312, 320) aus dem externen Inhalt und auf der Grundlage des Interesseninhalts, und wobei er nur eine Teilmenge von Informationen in dem externen Inhalt enthält;
Erzeugen (408), auf der Grundlage des zusammengefassten Inhalts (312, 320), eines Quicklinks (314, 322), der einen Leser direkt zu einem Abschnitt des externen Inhalts bringt; und
Modifizieren (410) der Nachricht (302), um den zusammengefassten Inhalt (312, 320) und den Quicklink (314, 322) in der Nachricht (302) einzubeziehen.

2. Verfahren nach Anspruch 1, wobei eine Beziehung zwischen dem Absender und dem Empfänger als ein Entitätenvektor modelliert wird und wobei der zusammengefasste Inhalt (312, 320) unter Verwendung des Entitätenvektors erzeugt wird.

3. Verfahren nach einem der vorhergehenden Ansprüche, ferner umfassend:
Ermöglichen des Bearbeitens des zusammengefassten Inhalts (312, 320) durch den Absender vor dem Liefern der Nachricht (302) an den Empfänger.

4. Verfahren nach einem der vorhergehenden Ansprüche, ferner umfassend: Bestimmen eines Kontexts der Nachricht (302); und
Verwenden des Kontexts, um eine Entität im zusammengefassten Inhalt (312, 320) hervorzuheben.

5. Verfahren nach Anspruch 4, wobei der Kontext eine Begrüßung (307), einen Betreff (306) oder einen Text (308) in der Nachricht umfasst.

6. Verfahren nach einem der vorhergehenden Ansprüche, ferner umfassend: Bestimmen, dass sich eine Entität in dem zusammengefassten Inhalt (312, 320) auf eine aktuelle Nachrichtengeschichte innerhalb eines vorbestimmten Datumsbereichs eines Datums der Nachricht bezieht; und
Verwenden der Bestimmung, um die Entität in dem zusammengefassten Inhalt (312, 320) zu verstärken.

7. System, umfassend:
mindestens einen Prozessor (502); und
einen Speicher (504), der Anweisungen speichert, die, wenn sie von dem mindestens einen Prozessor ausgeführt werden, das System veranlassen, Operationen durchzuführen von:
Erfassen (402) einer Nachricht (302) von einem Absender an einen Empfänger, wobei die Nachricht (302) einen Verweis auf externen Inhalt in Form eines Links (210, 310) oder eines Anhangs (220) umfasst;
Zugreifen (404) auf ein erstes Benutzermodell, das Interesseninformationen über Interessen des Absenders umfasst;
Zugreifen (404) auf ein zweites Benutzermodell, das Interesseninformationen über Interessen des Empfängers umfasst;
Identifizieren (406) von Interesseninhalten aus dem externen Inhalt auf der Grundlage des ersten und zweiten Benutzermodells als relevant für ein Interesse, das der Absender und der Empfänger miteinander gemein haben;
Erzeugen (408) eines zusammengefassten Inhalts (312, 320) aus dem externen Inhalt und auf der Grundlage des Interesseninhalts, und wobei er nur eine Teilmenge von Informationen in dem externen Inhalt enthält;
Erzeugen (408), auf der Grundlage des zusammengefassten Inhalts (312, 320), eines Quicklinks (312, 322), der einen Leser direkt zu einem Abschnitt des externen Inhalts bringt; und
Modifizieren (410) der Nachricht (302), um den zusammengefassten Inhalt (312, 320) und den Quicklink (314, 322) in der Nachricht (302) einzubeziehen.

8. System nach Anspruch 7, wobei die Anweisungen das System veranlassen, ferner die Operationen durchzuführen von:
Bestimmen einer Bewertung des zusammengefassten Inhalts (312, 320); und Präsentieren der Bewertung mit dem zusammengefassten Inhalt (312, 320).

9. System nach Anspruch 7 oder 8, wobei die Anweisungen das System veranlassen, ferner die Operationen durchzuführen von:
Bestimmen eines Kontexts der Nachricht (302); und
Verwenden des Kontexts, um eine Entität im zusammengefassten Inhalt (312, 320) hervorzuheben.

10. System nach einem der Ansprüche 7 bis 9, wobei die Anweisungen das System veranlassen, ferner die Operationen durchzuführen von:
Ermöglichen des Bearbeitens des zusammengefassten Inhalts (312, 320) durch den Absender vor dem Liefern der Nachricht (302) an den Empfänger.

11. System nach einem der Ansprüche 7 bis 10, wobei die Anweisungen das System veranlassen, ferner die Operationen durchzuführen von:
Bereitstellen einer Option (260) für den Absender, den zusammengefassten Inhalt (312, 320) in eine andere Sprache zu übersetzen.

12. Nichtflüchtiges computerlesbares Medium, das Anweisungen umfasst, die, wenn sie ausgeführt werden, ein System veranlassen, alle Schritte des Verfahrens nach einem der Ansprüche 1 bis 6 durchzuführen.

## Revendications

1. Procédé mis en œuvre par ordinateur comprenant :
la détection (402), par un microprocesseur d'un dispositif informatique, d'un message (302) d'un expéditeur à un destinataire, le message (302) comprenant une référence à un contenu externe sous la forme d'un lien (210, 310) ou d'une pièce jointe (220) ;
l'accès (404) à un premier modèle d'utilisateur comprenant des informations d'intérêt concernant les intérêts de l'expéditeur ;
l'accès (404) à un second modèle d'utilisateur comprenant des informations d'intérêt concernant les intérêts du destinataire ;
l'identification (406), sur la base des premier et second modèles d'utilisateur, du contenu d'intérêt à partir du contenu externe en tant que pertinent pour un intérêt qui est commun entre l'expéditeur et le destinataire ;
la génération (408) d'un contenu résumé (312, 320) à partir du contenu externe et sur la base du contenu d'intérêt et contenant uniquement un sous-ensemble d'informations dans le contenu externe ;
la génération (408), sur la base du contenu résumé (312, 320), d'un lien rapide (314, 322) qui amène un lecteur directement à une partie du contenu externe ; et
la modification (410) du message (302) pour comprendre le contenu résumé (312, 320) et le lien rapide (314, 322) dans le message (302).

2. Procédé selon la revendication 1, une relation entre l'expéditeur et le destinataire étant modélisée sous la forme d'un vecteur d'entité, et ledit contenu résumé (312, 320) étant généré à l'aide du vecteur d'entité.

3. Procédé selon l'une quelconque des revendications précédentes, comprenant en outre :
l'habilitation de l'expéditeur à éditer le contenu résumé (312, 320) avant la distribution du message (302) au destinataire.

4. Procédé selon l'une quelconque des revendications précédentes, comprenant en outre : la détermination d'un contexte du message (302) ; et
l'utilisation du contexte pour souligner une entité dans le contenu résumé (312, 320).

5. Procédé selon la revendication 4, ledit contexte comprenant un message d'accueil (307), un sujet (306) ou un texte (308) dans le message.

6. Procédé selon l'une quelconque des revendications précédentes, comprenant en outre :
la détermination qu'une entité dans le contenu résumé (312, 320) se rapporte à un reportage d'actualité dans une plage de dates prédéfinie d'une date du message ; et
l'utilisation de la détermination pour amplifier l'entité dans le contenu résumé (312, 320).

7. Système comprenant :
au moins un processeur (502) ; et
une mémoire (504) qui stocke des instructions qui, lorsqu'elles sont exécutées par le au moins un processeur, amènent le système à effectuer des opérations de :
détection (402) d'un message (302) d'un expéditeur à un destinataire, le message (302) comprenant une référence à un contenu externe sous la forme d'un lien (210, 310) ou d'une pièce jointe (220) ;
l'accès (404) à un premier modèle d'utilisateur comprenant des informations d'intérêt concernant les intérêts de l'expéditeur ;
l'accès (404) à un second modèle d'utilisateur comprenant des informations d'intérêt concernant les intérêts du destinataire ;
l'identification (406), sur la base des premier et second modèles d'utilisateur, du contenu d'intérêt à partir du contenu externe en tant que pertinent pour un intérêt qui est commun entre l'expéditeur et le destinataire ;
la génération (408) d'un contenu résumé (312, 320) à partir du contenu externe et sur la base du contenu d'intérêt et contenant uniquement un sous-ensemble d'informations dans le contenu externe ;
la génération (408), sur la base du contenu résumé (312, 320), d'un lien rapide (312, 322) qui amène un lecteur directement à une partie du contenu externe ; et
la modification (410) du message (302) pour comprendre le contenu résumé (312, 320) et le lien rapide (314, 322) dans le message (302).

8. Système selon la revendication 7, les instructions amenant le système à effectuer en outre les opérations de :
détermination d'une notation du contenu résumé (312, 320); et la présentation de la notation avec le contenu résumé (312, 320).

9. Système selon la revendication 7 ou 8, les instructions amenant le système à effectuer en outre les opérations de :
détermination d'un contexte du message (302) ; et
l'utilisation du contexte pour souligner une entité dans le contenu résumé (312, 320).

10. Système selon l'une quelconque des revendications 7 à 9, les instructions amenant le système à effectuer en outre les opérations de :
habilitation de l'expéditeur à éditer le contenu résumé (312, 320) avant la distribution du message (302) au destinataire.

11. Système selon l'une quelconque des revendications 7 à 10, les instructions amenant le système à effectuer en outre les opérations de :
fourniture d'une option (260) à l'expéditeur pour traduire le contenu résumé (312, 320) dans une autre langue.

12. Support non transitoire lisible par ordinateur comprenant des instructions qui, lorsqu'elles sont exécutées, amènent un système à effectuer toutes les étapes du procédé selon l'une quelconque des revendications 1 à 6.
